# EUROPEAN PATENT APPLICATION

(11) **EP 3 125 183 A1**
(43) Date of publication of application: **01.02.2017**
(21) Application number: 16154030.7
(22) Date of filing: 03.02.2016
(51) Int. Cl.: G06Q 20/32

(54) **METHODS AND SYSTEMS FOR FINANCIAL ACCOUNT ACCESS MANAGEMENT**

(30) Priority: 30.07.2015 IN 2890MU2015
(71) Applicant: Tata Consultancy Services Limited, Maharashtra (IN)
(72) Inventor: VADIVEL, Padmanaban, 600097 Chennai, Tamil Nadu (IN); MANI, Jayasekar, 600058 Chennai, Tamil Nadu (IN); PONNAN, Sureshbabu, 600073 Chennai, Tamil Nadu (IN)
(74) Representative: Goddar, Heinz J.

(57) **Abstract**

A system 200 and a method 300 for managing access to a financial account are provided. The method 300 includes receiving a request from a primary electronic device for allowing at least one secondary electronic device to access the financial account based on one or more access rules, where the financial account is associated with a primary user and includes a primary account limit. The at least one secondary electronic device is associated with at least one secondary user. The at least one secondary electronic device is allowed to access the financial account based on the one or more access rules, where the one or more access rules includes at least assigning a secondary account limit to at least one secondary electronic device. The secondary account limit is at least a portion of the primary account limit.

## Description

### PRIORITY CLAIM

This application claims the benefit of priority of India Patent Application Serial no. 2890/MUM/2015, entitled "Methods And Systems For Financial Account Access Management", filed on July 30^{th} 2015, the benefit of priority of which is claimed hereby, and which is incorporated herein in its entirety.

### TECHNICAL FIELD

The present subject matter relates, in general, to financial account access management and, in particular, to providing method and systems for managing access to a financial account by a plurality of users.

### BACKGROUND

Currently, with advancement in technology relating to financial transactions, various financial products and services have been introduced and practiced.. Examples of such products and/or services include, but are not limited, to credit card, a debit card, and the like, online transactions, and so on. Such financial products and services allow users to make payments without using physical currency. For example, the credit and/or debit cards allow the user to make payments at a merchant's location by just swiping the card at a point of sale (POS) device, thereby precluding carrying physical cash while making a transaction. Therefore, using cards as opposed to physical cash is considered convenient. In addition, cash-based transaction are more secure that performing physical cash transactions since it is more easy to carry a physical card than carrying bulky physical currency.

The current cards (such as debit cards, credit cards, etc.) are issued to a user who is account-holder of a financial account associated with that card, and vice-versa. For example, a user having an account with a financial institution (such as a bank) may be issued a card (such as a credit and/or debit card) with a credit limit from that financial institution, which the user can exhaust using the card. Such cards are typically assigned on a single user basis, for instance only to the account-holder. The account-holder may use the card for making transactions upon verification/authentication. Maintenance of single-user physical cards by different individuals is a costly and challenging task. Moreover, the spending limit of such cards is limited and preassigned, and cannot be changed without intervention of the financial institution/entity issuing the card. This may pose a challenge in situations where due to certain circumstances the credit limit has to be increased or decreased in real-time.

### SUMMARY

The following presents a simplified summary of some embodiments of the disclosure in order to provide a basic understanding of the embodiments. This summary is not an extensive overview of the embodiments. It is not intended to identify key/critical elements of the embodiments or to delineate the scope of the embodiments. Its sole purpose is to present some embodiments in a simplified form as a prelude to the more detailed description that is presented below.

In view of the foregoing, an embodiment herein provides a method and system for enabling financial transaction using mobile devices. In one aspect, a system for enabling financial transactions using the mobile devices is provided. The system includes a computer-implemented system executed by a computing device for access management of a financial account is disclosed. The system includes at least one memory storing instructions; and at least one processor coupled to said at least one memory, wherein said at least one processor configured by said instructions to: receive, by the computing device, a request from a primary electronic device to allow at least one secondary electronic device to access the financial account based on one or more access rules, the financial account being associated with a primary user and comprising a primary account limit, the at least one secondary electronic device being associated with at least one secondary user, and allow the at least one secondary electronic device to access the financial account based on the one or more access rules, wherein the one or more access rules comprises at least assigning a secondary account limit to at least one secondary electronic device, the secondary account limit being at least a portion of the primary account limit.

In another aspect, computer-implemented method executed by a computing device for access management of a financial account is disclosed. The method includes receiving, by the computing device, a request from a primary electronic device to allow at least one secondary electronic device to access the financial account based on one or more access rules, the financial account being associated with a primary user and comprising a primary account limit, the at least one secondary electronic device being associated with at least one secondary user; and allowing the at least one secondary electronic device to access the financial account based on the one or more access rules, wherein the one or more access rules comprises at least assigning a secondary account limit to at least one secondary electronic device, the secondary account limit being at least a portion of the primary account limit.

In yet another aspect, a non-transitory computer-readable medium having embodied thereon a computer program for executing a method for access management of a financial account is disclosed. The method includes: receiving, by a computing device, a request from a primary electronic device to allow at least one secondary electronic device to access the financial account based on one or more access rules, the financial account being associated with a primary user and comprising a primary account limit, the at least one secondary electronic device being associated with at least one seconday user; and allowing the at least one secondary electronic device to access the financial account based on the one or more access rules, wherein the one or more access rules comprises at least assigning a secondary account limit to at least one secondary electronic device, the secondary account limit being at least a portion of the primary account limit

### BRIEF DESCRIPTION OF THE FIGURES

The detailed description is described with reference to the accompanying figures. In the figures, the left-most digit(s) of a reference number identifies the figure in which the reference number first appears. The same numbers are used throughout the drawings to reference like features and modules.
FIG 1 illustrates example architecture of accessing a financial account for performing transactions, in accordance with an example embodiment;
FIG. 2 illustrates a block diagram of a system for access management of a financial account in accordance with an example embodiment;
FIG 3 is a flow diagram depicting an example method for managing access to a financial account, in accordance with an example embodiment; and
FIGS. 4A-4D illustrates an example user interface for managing access to a financial account, in accordance with an example embodiment.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

### DETAILED DESCRIPTION

The present disclosure relates to a system and methods for management of a financial account access. Herein, the term 'financial account' may refer to an account in an financial institution, for example a banking account, a credit account, a loan account, a debit account, and so on, that may be utilized by a user for at least for a purpose of expenditure. Various embodiments herein disclose system and method for accessing the financial account for performing financial transactions.

Unless specifically stated otherwise as apparent from the following discussions, it is to be appreciated that throughout the present disclosure, discussions utilizing terms such as "determining" or "generating" or "comparing" or the like, refer to the action and processes of a computer system, or similar electronic activity detection device, that manipulates and transforms data represented as physical (electronic) quantities within the computer system's registers and memories into other data similarly represented as physical quantities within the computer system memories or registers or other such information storage, transmission or display devices.

The embodiments herein and the various features and advantageous details thereof are explained more fully with reference to the non-limiting embodiments that are illustrated in the accompanying drawings and detailed in the following description. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

The methods and systems are not limited to the specific embodiments described herein. In addition, the method and system can be practiced independently and separately from other modules and methods described herein. Each device element/module and method can be used in combination with other elements/modules and other methods.

Throughout the description and claims of this complete specification, the word "comprise" and variations of the word, such as "comprising" and "comprises," means "including but not limited to," and is not intended to exclude, for example, other additives, components, integers or steps. "Exemplary" means "an example of" and is not intended to convey an indication of a preferred or ideal embodiment. "Such as" is not used in a restrictive sense, but for explanatory purposes.

For a firmware and/or software implementation, the methodologies can be implemented with modules (e.g., procedures, functions, and so on) that perform the functions described herein. Any machine readable medium tangibly embodying instructions can be used in implementing the methodologies described herein. For example, software codes and programs can be stored in a memory and executed by a processing unit.

In another firmware and/or software implementation, the functions may be stored as one or more instructions or code on a non-transitory computer-readable medium. Examples include computer-readable media encoded with a data structure and computer-readable media encoded with a computer program. The computer-readable media may take the form of an article of manufacturer. The computer-readable media includes physical computer storage media. A storage medium may be any available medium that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to store desired program code in the form of instructions or data structures and that can be accessed by a computer; disk and disc, as used herein, includes compact disc (CD), laser disc, optical disc, digital versatile disc (DVD), floppy disk, and Blue-ray disc where disks usually reproduce data magnetically, while discs reproduce data optically with lasers. Combinations of the above should also be included within the scope of computer-readable media.

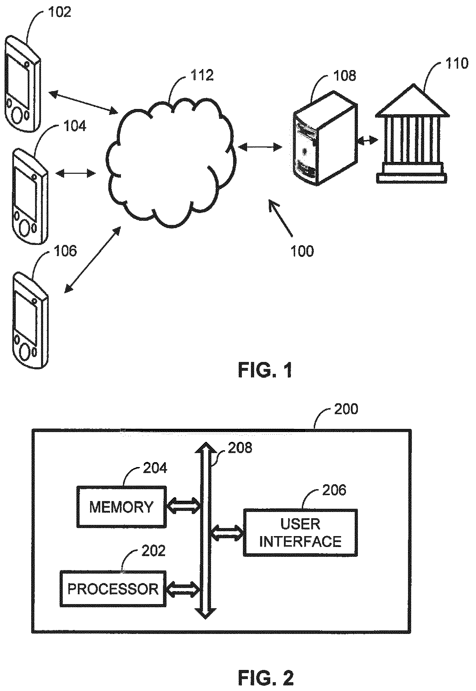

The manner, in which the system and method for accessing the financial account shall be implemented, has been explained in details with respect to the FIGS. 1 through 4D, while aspects of described methods and systems for accessing the financial account can be implemented in any number of different systems, utility environments, and/or configurations, the embodiments are described in the context of the following exemplary system(s).

FIG. 1 illustrates an example architecture 100 of accessing a financial account for performing transactions, in accordance with an example embodiment. The embodiments are directed to performing financial transactions using an electronic device. The example architecture 100 is shown to include a primary electronic device 102, at least one secondary electronic device such as devices 104, 106, a computing device 108, a financial institution 110, and communication network such as communication network 112.

In an embodiment, the communication network 112 may comprise any combination of Local Area Networks (LANs), Wide Area Networks (WANs), Internet Protocol (IP) networks, phone networks, Public Services Telephone Networks (PSTN), wireless networks, cellular networks, Wi-Fi networks, Bluetooth networks, cable networks, data buses, or the like, or any combination thereof used for transferring information between the devices 104, 106, the computing device 108, and the financial institution 110.

In an example embodiment, the primary electronic device 102 includes a mobile device. Examples of mobile device include a mobile phone, a laptop, a PDA, a tablet, and so on. In an embodiment, the primary electronic device 102 belongs to a primary user, and may facilitate the primary user in accessing a financial account in the financial institution 110. Herein, such a user having a financial account in the financial institute may be referred to as a "primary user" of the financial account. For example, the primary user may have the financial account (such as either of a savings account, a credit account, etc.) with the financial institution 110, and thus the primary user may have the access to the financial account. In an example embodiment, the primary user may access the financial account by accessing a mobile application of the financial account on the primary electronic device 102. It will be understood that the primary user may be provided an access to the financial account only upon being authenticated by the financial institution 110.

The primary user can perform a financial transaction at a merchant's site, and make the payments. In an embodiment, the primary user can make the payment to the merchant directly by using the primary electronic device 102. In particular, instead of paying using a physical credit card and/or physical currency, various embodiments of the disclosure allows the user to utilize the mobile application (pertaining to the financial account) installed on the first electronic device 102 for making the payment. In an embodiment, the primary user is entitled to spend a predefined amount using the mobile application. Such a predetermined amount to which the primary user of the financial account is entitled to utilize is referred to as 'primary account limit'. For instance, the 'primary account limit' of a credit card may be termed as a 'credit limit' of the account.

Various embodiments of the present disclosure allow providing an access of the financial account to at least one secondary electronic device, where the at least one secondary electronic device belongs to at least one secondary users. In other words, the primary electronic device may facilitate in allowing the at least one secondary users to access at least a portion of the primary account limit by using the at least one secondary electronic device. Such a portion of the primary account limit may be assigned for use to the least one secondary electronic device may hereinafter be termed as "secondary account limit".

In an example embodiment, the primary user may make a request from the primary electronic device 102 to allow facilitating access of the secondary electronic devices 104, 106 to the financial account. The request may be directed to the computing device 108. In an embodiment, the computing device may be one or more servers for example a farm of networked servers, a clustered server environment, or a cloud network of computing devices, that may be included in, or otherwise, in communication with the financial institution 110. In another embodiment, the computing device 108 may be a mobile electronic device capable of communicating with the financial institution 110, and implementing a system for facilitating managing access to the financial account. In particular, the computing device 108 may include a system for managing access to the financial account by a plurality users including the primary user and the at least one secondary user. A system for facilitating the access of the financial account by the plurality of users is described further with reference to FIG. 2.

FIG. 2 illustrates a block diagram of a system 200 for access management of a financial account in accordance with an example embodiment. In an example embodiment, the system 200 may be embodied in, or is in direct communication with a computing device, for example the computing device 108 (FIG. 1). The system 200 includes or is otherwise in communication with at least one processor such as a processor 202, at least one memory such as a memory 204, and a network interface element 206. The processor 202, memory 204, and the network interface element 206 may be coupled by a system bus such as a system bus 208 or a similar mechanism.

The at least one memory such as the memory 204, may store instructions, any number of pieces of information, and data, used by a computer system, for example the system 200 to implement the functions of the 200. The memory 204 may include for example, volatile memory and/or non-volatile memory. Examples of volatile memory may include, but are not limited to volatile random access memory (RAM). The non-volatile memory may additionally or alternatively comprise an electrically erasable programmable read only memory (EEPROM), flash memory, hard drive, or the like. Some examples of the volatile memory includes, but are not limited to, random access memory, dynamic random access memory, static random access memory, and the like. Some example of the non-volatile memory includes, but are not limited to, hard disks, magnetic tapes, optical disks, programmable read only memory, erasable programmable read only memory, electrically erasable programmable read only memory, flash memory, and the like. The memory 204 may be configured to store information, data, applications, instructions or the like for enabling the system 200 to carry out various functions in accordance with various example embodiments. Additionally or alternatively, the memory 204 may be configured to store instructions which when executed by the processor 206 causes the system 200 to behave in a manner as described in various embodiments.

The at least one processor such as the processor 202 may be implemented as one or more microprocessors, microcomputers, microcontrollers, digital signal processors, central processing units, state machines, logic circuitries, and/or any devices that facilitates in managing access to a financial account. Further, the processor 202 may comprise a multi-core architecture. Among other capabilities, the processor 202 is configured to fetch and execute computer-readable instructions or modules stored in the memory 204. The processor 202 may include circuitry implementing, among others, audio and logic functions associated with the communication. For example, the processor 202 may include, but are not limited to, one or more digital signal processors (DSPs), one or more microprocessor, one or more special-purpose computer chips, one or more field-programmable gate arrays (FPGAs), one or more application-specific integrated circuits (ASICs), one or more computer(s), various analog to digital converters, digital to analog converters, and/or other support circuits. The processor 202 thus may also include the functionality to encode messages and/or data or information. The processor 202 may include, among other things, a clock, an arithmetic logic unit (ALU) and logic gates configured to support operation of the processor 202. Further, the processor 202 may include functionality to execute one or more software programs, which may be stored in the memory 204 or otherwise accessible to the processor 202.

The network interface element 206 is configured to facilitate communication between the financial institute, the primary electronic device pertaining to the primary user and at least one second electronic device pertaining to at least one secondary user. The network interface element 206 may be in form of a wireless connection or a wired connection. Examples of wireless network interface element 206 may include, but are not limited to, IEEE 802.11 (Wifi), BLUETOOTH®, or a wide-area wireless connection. Example of wired network interface element 206 includes, but is not limited to Ethernet.

In an example embodiment, a user interface 206 may be in communication with the processor 202. Examples of the user interface 206 include but are not limited to, input interface and/or output user interface. The input interface is configured to receive an indication of a user input. The output user interface provides an audible, visual, mechanical or other output and/or feedback to the user. Examples of the input interface may include, but are not limited to, a keyboard, a mouse, a joystick, a keypad, a touch screen, soft keys, and the like. Examples of the output interface may include, but are not limited to, a display such as light emitting diode display, thin-film transistor (TFT) display, liquid crystal displays, active-matrix organic light-emitting diode (AMOLED) display, a microphone, a speaker, ringers, vibrators, and the like. In an example embodiment, the user interface 206 may include, among other devices or elements, any or all of a speaker, a microphone, a display, and a keyboard, touch screen, or the like. In this regard, for example, the processor 202 may comprise user interface circuitry configured to control at least some functions of one or more elements of the user interface 206, such as, for example, a speaker, ringer, microphone, display, and/or the like. The processor 202 and/or user interface circuitry comprising the processor 202 may be configured to control one or more functions of one or more elements of the user interface 206 through computer program instructions, for example, software and/or firmware, stored on a memory, for example, the at least one memory 204, and/or the like, accessible to the processor 202.

In an example embodiment, the processor 202 is configured to, with the content of the memory 204, and optionally with other components described herein, to cause the apparatus 200 to allow an access to a mobile application associated with the financial account on a primary electronic device. In an example embodiment, the access to the mobile application is allowed based on first authentication details associated with the primary user. In certain embodiments, the authentication details may include biometric inputs such as a voice-recognized word or phrase, a detected fingerprint, a detected iris pattern, a 3-D detected face, and a combination thereof. Biometric input may be detected inputs received at the primary electronic device such as touch sensitive display screen, microphones, cameras, or may be input by special purpose devices integrated into or coupled to the primary electronic device. Embodiments may be configured to utilize one or more of these or other authentication details according to specific security needs and capabilities of the first electronic device.

In an example embodiment, the processor 202 is configured to, with the content of the memory 204, and optionally with other components described herein, to cause the system 200 to receive a request from the first electronic device to allow an access of at least one secondary electronic device to the financial account based on one or more access rules, where the at least one secondary electronic device belongs to at least one secondary user. It will be noted herein in the present description that the term 'secondary user' may refer to a user who is not an account holder of the financial account, and accordingly, the secondary user is not privileged to access the financial account. Various embodiments disclosed herein are directed to methods and systems for allowing the secondary user to access the financial account so that the secondary user can utilize at least a portion of the account limit associated with the financial account. It will also be noted herein, that the at least one secondary user may include a plurality of users, and in such embodiments, the system 200 may be configured to receive multiple requests from the first electronic device to allow access to the plurality of the secondary electronic devices (each belonging to a different user) to the financial account.

In an example embodiment, the one or more access rules may include providing one or more identifiers pertaining to the at least one secondary electronic device for enabling the at least one secondary user device to access the financial account. In particular, the one or more identifier may include device identifiers associated with the at least one secondary electronic devices. Examples of such device identifiers include, but are not limited to, a mobile number, an International Mobile Equipment Identity (IMEI) number, a device model number and so on associated with the secondary electronic device. In an example embodiment, the processor 202 is configured to, with the content of the memory 204, and optionally with other components described herein, to cause the system 200 to receive the one or more device identifiers from the at least the primary electronic device. In another example embodiment, the system 200 may be configured to receive the one or more device identifiers from the primary electronic device and the at least one secondary electronic device. For example, in one scenario, mobile number of the secondary electronic device may be provided by the primary electronic device to the system 200. On receiving the mobile number associated with the secondary electronic device from the primary electronic device, the system 200 may configure a message having a uniform resource locator (URL), and send the same to the secondary electronic device using the mobile number of the secondary electronic device. The URL may facilitate in automatically retrieving the IMEI number from the secondary electronic device, and, providing the same to the system 200. The IMEI number retrieved from the at least one secondary electronic device may be compared with the IMEI number provided by the primary electronic device to authenticate the secondary electronic device. In an example embodiment, based on the mobile number and the IMEI number, the system 200 may be configured to send a message to the secondary electronic device informing regarding the permission for accessing the financial account using the secondary electronic device. In an example embodiment, the IMEI number may be stored in the memory 204 of the system 200. The IMEI number may be utilized for authorization of a transaction to identify the electronic device (for instance, the secondary electronic device) from which the transaction request is initiated. Also, the system 200 may be caused to associate the transaction with a user identification pertaining to the user of the secondary electronic device.

In another example embodiment, the one or more access rules may include assigning a secondary account limit to at least one secondary electronic device of the at least one secondary user, where the secondary account limit is at least a portion of the primary account limit. In an example embodiment, the processor 202 is configured to, with the content of the memory 204, and optionally with other components described herein, to cause the apparatus 200 to assign the secondary account limit to at the least one secondary electronic device of the at least one secondary user. In an embodiment, the access of the secondary electronic devices to the financial account refers to a respective portion of the account limit assigned to said secondary electronic device or to the respective secondary user of the secondary electronic device. For instance, the access to the financial account may be provided to a plurality of secondary user devices such as user device B1 (belonging to a secondary user U1), B2 (belonging to a secondary user U2), and so on, by the primary electronic device (belonging to the primary user P1).

In yet another example embodiment, the one or more access rules may further include allowing a revision of the secondary account limit assigned to the at least one secondary electronic device of the at least one secondary user. In still another example embodiment, the one or more access rules may further include eliminating the secondary account limit assigned to the at least one secondary electronic device of the at least one secondary user.

In an example embodiment, upon allowing the at least one secondary electronic device to access the financial account, the system 200 may be caused to send a message to the at least one secondary electronic device indicative of provisioning of the access of the financial institute to the at least one secondary electronic device. For example, the message may include a URL of a website of the financial institute, or the message may provide information regarding downloading a mobile application of the financial institute at the secondary electronic device, thereby providing the access to the financial account on the secondary electronic device. In an embodiment, the mobile application of the financial account may be downloaded on the second electronic device based on device capability and configuration of the secondary electronic device. In an example embodiment, the downloaded mobile application may enable using the mobile application for making financial transactions from the secondary electronic device. For example, the mobile application may facilitate in making online financial transactions using the mobile application on the second electronic device. Additionally or alternatively, the mobile application may enable using the second electronic device as a virtual credit card. For instance, the system 200 may store the device identifiers such as the of mobile number, IMEI number, SIM number, device serial number, user identification and password associated with the at least one secondary electronic device. For every transaction being performed by using the secondary electronic device, the system may be caused to validate one or more identifiers of the secondary electronic device, and upon a matching the device identifiers with corresponding stored device identifiers, the system 200 may be caused to authorize the transaction.

In an example embodiment, the system 200 may allow the at least one secondary user to configure authentication details thereof for facilitating access of the financial account. In an example embodiment, the processor 202 is configured to, with the content of the memory 204, and optionally with other components described herein, to cause the apparatus 200 to receive a request from the secondary electronic device for allowing defining of secondary authentication details associated with the at least one secondary user, where the secondary authentication details may facilitate the at least one secondary user to access the second account limit of the financial account. In an example embodiment, the system 200 may be caused to allow the at least one secondary user to define secondary authentication details upon a determination of device details and capabilities associated with the secondary electronic device. For example, in case the secondary electronic device is capable of performing a biometric scan using finger printing, the system 200 may allow defining the finger print based authentication for the secondary user of the secondary electronic device.

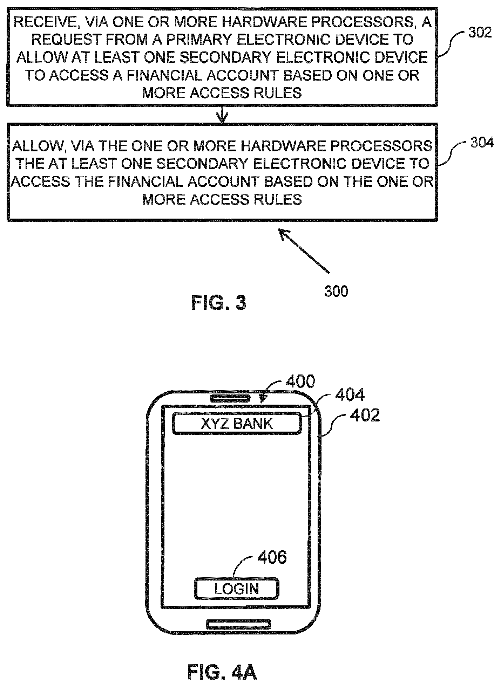

FIG 3 is a flow diagram depicting an example method 300 for managing access to a financial account, in accordance with an example embodiment. The method 300 depicted in the flow chart may be executed by a system, for example, the system 200 of FIG. 2. In an example embodiment, the system 200 may be embodied in a computing device, for example, the computing device 108 (FIG. 1).

Operations of the flowchart, and combinations of operation in the flowchart, may be implemented by various means, such as hardware, firmware, processor, circuitry and/or other device associated with execution of software including one or more computer program instructions. For example, one or more of the procedures described in various embodiments may be embodied by computer program instructions. In an example embodiment, the computer program instructions, which embody the procedures, described in various embodiments may be stored by at least one memory device of an apparatus and executed by at least one processor in the apparatus. Any such computer program instructions may be loaded onto a computer or other programmable apparatus (for example, hardware) to produce a machine, such that the resulting computer or other programmable apparatus embody means for implementing the operations specified in the flowchart. It will be noted herein that the operations of the method 300 are described with help of system 200. However, the operations of the method 300 can be described and/or practiced by using any other system.

At 302, a request is received at a computing device (incorporating a system such as the system 200 of FIG 2 from a primary electronic device to allow an access of at least one secondary user to the financial account based on one or more access rules. In an example embodiment, the financial account is associated with a primary user and includes a primary account limit. In an embodiment, the primary user may send the request from the primary electronic device to the computing device. In an example embodiment, the one or more rules may include defining the at least one portion of the primary account limit to be assigned as a secondary account limit to at least one secondary electronic device belonging to the at least one secondary user. For example, in case the primary account limit is USD10000, then a portion of USD 10000 such as USD1000 may be assigned as a secondary account limit to a secondary user, and USD 2000 as the secondary account limit to another secondary user. Herein, it will be noted that from the initial primary account limit of USD 10000, a total of USD3000 account limit has been assigned as secondary account limit to secondary user, and in accordance, only an account limit of USD7000 is available as the primary account limit.

In an embodiment, assigning the portion of the primary account limit may be performed based on one or more device identifiers associated with the at least one secondary electronic device. For example, for identifying the secondary electronic devices and the secondary users of the secondary electronic devices at the financial institution, the primary electronic device may provide the device one or more identifiers such as the SIM number, IMEI number, and so on associated with the secondary electronic device to the system.

At 504, the computing device allows the access of at least the portion of the financial account to the at least one secondary user based on the one or more access rules. For example, upon verification of the identity of the secondary electronic device, the system allows the access of the secondary electronic device to the financial account. In an embodiment, the one or more access rules may include revising the secondary account limit, and in such a scenario the computing device (embodying the system) allows access to only the revised account limit. For example, the computing device may receive a request from the first electronic device for allow redefining/revising the credit limit of for instance USD5000 assigned to a secondary electronic device to a value greater or less than USD 5000, such as USD 2000. In such an instance, the computing device may facilitate in revising the assigned secondary account limit to the secondary electronic device. A detailed method of managing access to the financial account is described further with reference to FIGS. 4A-4D.

FIGS. 4A-4D illustrates an example user interface 400 for managing access to a financial account, in accordance with an example embodiment. In particular, FIGS. 4A-4D illustrates utilizing an electronic device, such as a mobile phone 402, for managing access to a financial account.

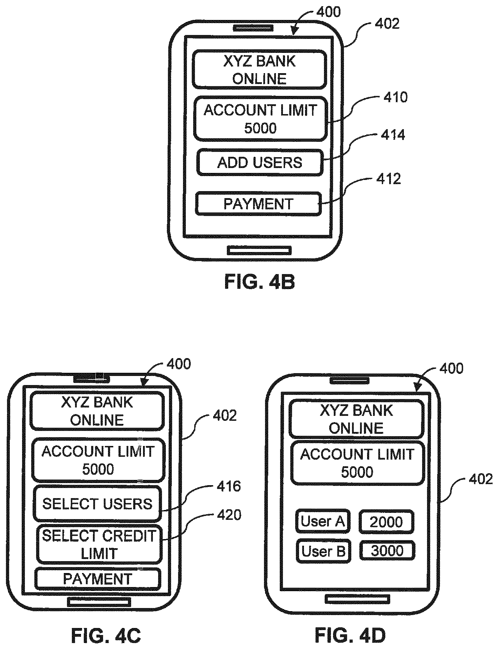

As discussed before, a primary user may hold financial account in a financial institute. For example, a primary user may hold an account in a bank, for instance, a XYZ bank. In order to access the banking services, the primary user may download a mobile application of the XYZ bank on a mobile phone belonging the primary user. As illustrated in FIG 4A, the mobile application 404 may provide the primary user an access to the banking services upon user login (for example, as marked by numeral 406). In an embodiment, the banking account may provide a credit facility to the primary user, meaning thereby that the primary user can access use a 'credit limit' provided by the XYZ bank to make transactions. For example, as illustrated in FIG. 4B, upon the user log-in, the UI 400 of the mobile device 402 displays a screen having the credit limit (represented as account limit 410) to which user is entitled to. As shown, the credit limit is shown as USD10000.

Various embodiments of the present disclosure allow the primary user to utilize the mobile banking application instead of a physical credit card for making transactions at a merchant's POS. For example. A payment tab 412 provided by the banking application may enable the primary user to swipe/flash the mobile phone to be utilized for making the payments, instead of swiping a physical credit card. For example, the UI may include a default bar code which can be scanned by the POS terminal for authentication. In another example scenario, the UI may include a QR code that may be scanned. Alternatively or additionally, the UI may enable generation of a unique identifier such as an OTP or a SMS that be utilized for authenticating the transaction. For instance the UI may include a component that may trigger generation of the unique identifier. In an example scenario, the component may be activated for triggering the generation of the unique identifier based on a user input such as a touch, a voice based input, a shaking of the mobile device in a particular manner, and so on. As such, the mobile phone of the primary user having the bank application installed therein enables utilization of the mobile phone as a virtual credit card.

Various other embodiments allows the primary user to add secondary users, thereby allowing the secondary users to access the financial account such as the banking account in the XYZ bank. For example, the UI may provide an "Add User" tab 414 for allowing addition of the secondary users. For instance, as illustrated in FIG. 4C, the UI 400 provides a "Select users" tab 416 for allowing selection of users to be added as secondary users of the banking account. In an example embodiment, the selection of the users may be enabled by automatic selection of one or more users based on user preference of the primary user. For example, the system may enable automatic selection of a nominee of the primary user as the secondary user for the banking account. In an example embodiment, the UI may receive inputs from the primary user regarding addition of the secondary users. For instance, the secondary users may be selected from a contact list configured in the mobile phone of the primary user. In an example embodiment, an information associated with the selected secondary users is provided to a computing device, for example, the computing device 200 of FIG. 2. In an example embodiment, the computing device may be a server, for instance a bank sever. In another embodiment, the computing device may be in communication with the bank server for facilitating the access management of the banking account. In yet another embodiment, the computing device may refer to a system embodied in the mobile device of the primary that may be configured to communicate with the bank server associated with the financial account.

In an embodiment, the computing device may receive the request for allowing the access of the secondary users to the financial account. In an example embodiment, the computing device may receive the device identifiers of the mobile devices belonging to respective secondary users. In addition, the computing device receives the portion of credit limit that may be assigned to the respective secondary users. For example, the credit limit to be assigned to a secondary user A and secondary user B may be USD 2000 and USD 3000 respectively. As shown in FIG. 4C, the UI may provide an option to define the credit limits for the respective secondary users by for instance providing "Select users" tab 416 and "Select credit limit" tab 420. In an embodiment, the computing device is capable of automatically revising the primary credit limit upon defining the secondary credit limits. For instance, as shown in FIG. 4B, the initial primary account limit is USD10000, however upon defining the secondary credit limits of USD 2000 and USD 3000, the remaining amount of the primary credit limit, which is USD 5000 in this example may be designated as the revised primary credit limit, as illustrated in FIG 4D.

As described with reference to FIGS. 1-4D, the system proposed herein facilitates in managing access by a plurality of users (including a primary user and one or more secondary users) to the financial account in a secure and convenient manner. In particular, a system for management of a financial account by multiple users is proposed wherein the primary account/card holder may have complete control the way the primary account holder wants to electronically delegate the finance amongst one or more of family member, friends, in an employer-employee scenario, and so on, securely.

In addition, the system allows for assigning same or different credit limits for the different secondary users. In particular, the system provides flexibility to the primary card/account holder to set account spending/credit limits, manage financial spending in real-time without getting in touch with the bank. For example, the system may facilitate in updating and/or modifying credit limits of individual secondary users in real-time. Moreover, the system allows for revising the assigned credit limits for the one or more secondary users. Further, the system allows the one or more secondary users to define respective authentication details from their respective mobile devices. The system provides an implementation of a multi-user virtual credit card application where multiple users can use the same virtual credit card in a secure manner through mobile banking application. The use of virtual cards may preclude using a physical card, thereby improving security of financial transactions. In an embodiment, the system may be embodied in a mobile electronic device (such as a tablet) provided by the financial institution, where the mobile electronic device may incorporate additional security features, thereby further enhancing the security features for the financial transactions.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The foregoing description of the specific implementations and embodiments will so fully reveal the general nature of the implementations and embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the spirit and scope of the embodiments as described herein.

The preceding description has been presented with reference to various embodiments. Persons having ordinary skill in the art and technology to which this application pertains will appreciate that alterations and changes in the described structures and methods of operation can be practiced without meaningfully departing from the principle, spirit and scope.

## Claims

1. A computer-implemented system for access management of a financial account, the system comprising:
one or more hardware processors 202; and
a memory 204 coupled to the one or more hardware processors 202 and storing instructions, wherein said one or more hardware processors 202 configured by said instructions to:
receive a request from a primary electronic device to allow at least one secondary electronic device to access the financial account based on one or more access rules, the financial account being associated with a primary user and comprising a primary account limit, the at least one secondary electronic device being associated with at least one secondary user, and
allow the at least one secondary electronic device to access the financial account based on the one or more access rules, wherein the one or more access rules comprises at least assigning a secondary account limit to the at least one secondary electronic device, the secondary account limit being at least a portion of the primary account limit.

2. The system according to claim 1, wherein said one or more hardware processors 202 are further configured by the instructions to allow an access to a mobile application associated with the financial account on the first electronic device, the access being allowed based on first authentication details associated with the primary user.

3. The system according to claim 1, wherein the one or more access rules further comprises defining the access information for facilitating the access of the at least one secondary user to the financial account based on one or more device identifiers associated with the second electronic device.

4. The system according to claim 3, wherein a device identifier of the one of more of the device identifiers comprises one of a subscriber identity module (SIM) number and International mobile station equipment identity (IMEI) number.

5. The system according to claim 1, wherein the one or more access rules further comprises revising the secondary credit limit.

6. The system according to claim 1, wherein said one or more hardware processors 202 are further configured by the instructions to facilitate the at least one second electronic device to define second authentication details associated with the at least one secondary user, the second authentication details facilitating the at least one secondary user to access the second account limit of the financial account.

7. A computer-implemented method for access management of a financial account, the method comprising:
receiving, via one or more hardware processors, a request from a primary electronic device to allow at least one secondary electronic device to access the financial account based on one or more access rules, the financial account being associated with a primary user and comprising a primary account limit, the at least one secondary electronic device being associated with at least one secondary user; and
allowing, via the one or more hardware processors, the at least one secondary electronic device to access the financial account based on the one or more access rules, wherein the one or more access rules comprises at least assigning a secondary account limit to the at least one secondary electronic device, the secondary account limit being at least a portion of the primary account limit.

8. The method according to claim 7, further comprising allowing an access to a mobile application associated with the financial account on the first electronic device, the access being allowed based on first authentication details associated with the primary user.

9. The method according to claim 7, wherein the one or more access rules further comprises defining the access information for facilitating the access of the at least one secondary user to the financial account based on one or more device identifiers associated with the second electronic device.

10. The method according to claim 9, wherein a device identifier of the one of more of the device identifiers comprises one of a subscriber identity module (SIM) number and IMEI number.

11. The method according to claim 7, wherein the one or more access rules further comprises revising the secondary credit limit.

12. The method according to claim 7, further comprising facilitating the at least one second electronic device to define second authentication details associated with the at least one secondary user, the second authentication details facilitating the at least one secondary user to access the second account limit of the financial account.
